# EUROPEAN PATENT SPECIFICATION

(11) **EP 3 903 578 B1**
(45) Date of publication and mention of the grant of the patent: **23.08.2023**
(21) Application number: 21171355.7
(22) Date of filing: 29.04.2021
(51) Int. Cl.: A01K 5/02

(54) **FEEDING DEVICE FOR ANIMALS, IN PARTICULAR PIGS**
FÜTTERUNGSVORRICHTUNG FÜR TIERE, INSBESONDERE SCHWEINE
DISPOSITIF D'ALIMENTATION POUR ANIMAUX, EN PARTICULIER POUR LES PORCS

(30) Priority: 29.04.2020 NL 2025454
(43) Date of publication of application: 03.11.2021
(73) Proprietor: Hetman, Volodymyr, 52200 Zhovti Vody town (UA); Luttikhuis, Marcellinus, 84-207 Bojan (PL); Van der Wel, Cornelis, 2411 PG Bodegraven (NL); Yurity, Sautkin, 02095 Kyjiv (UA); Chuan, Huang, 610218 Sichuan (CN)
(72) Inventor: HETMAN, Volodymyr, 52200 Zhovti Vody town, Dnipropetrovsk region (UA)
(74) Representative: Verhees, Godefridus Josephus Maria

(56) References cited:
- BR-U2- MU8 800 040
- CN-A- 110 692 531
- US-A- 4 800 844

## Description

### Technical field of the invention

The invention relates to feeding device for animals, in particular pigs, comprising:
- two feed containers, each having a top and a bottom, which bottom is provided with a discharge opening,
- control means for controlling feed output through the discharge openings, and
- a feeding tray below the discharge openings, which feeding tray is freely rotatable about a vertical axis.

### Background of the invention

A feeding device according to the preamble of claim 1 is known from CN110692531A. With the rapid development of breeding industry, feeding is hard to meet the breeding requirements as it requires considerable investment of labor costs. At present, the common automatic feeding equipment in the market is able to automatically and quantitatively supply feed or automatically supply feed in batches, which can realize the automatic feeding of animal and can free human labor in guarding and frequent manual refilling. However, by using this common equipment, if the amount of feed supplied exceeds the required amount for growing and fattening pigs, it's easy for the pig to grub the feed out from the feeding tray and result in waste; whereas, if the feed is supplied in batches and the amount of each batch is less than the required amount for growing and fattening pigs, it's easy for the pigs to fight when they eat the feed.

### Summary of the invention

The invention is set out in the appended claims.

It is an object of the present invention to provide a feeding device for animals with which feed having an accurate amount of protein can be given to the animals. To this end the feeding device according to the invention comprises on the feeding tray vertical extending panels dividing the area above the feeding tray into separate feeding areas for animals, which vertical extending panels are provided with water supply lines having outflow openings located at distance from the center of the feeding tray near the middle between the center and the border of the feeding tray. Because the feed is supplied in the center of the feeding tray and should go smoothly from there to the eating area of the feeding tray, it has to be dry in the center of the tray otherwise it will stick to the tray in the center and block further feed supply. Further, in this embodiment there are no external or internal pipes which can be damaged by pigs.

The device according to the invention can mix two types of feed in different ratio based on the age of the animals thereby creating the accurate amount of protein. For the mixing of the feed no equipment is necessary because the animals when eating cause the feed tray to rotate and thereby mixing of the feed.

An embodiment of the feeding device according to the invention is characterized in that it further comprises a weighing device which is coupled to the feeding tray. The weighing device real-time weighs the feed on the feeding tray and the information is send to the controller to real-time control the weight of the feed supplied.

Preferably, the weighing device comprises a weighing sensor which is present near the top of the feed containers, as well as an elongated coupling element which is connected at one end to the feeding tray and at the other end to the weighing sensor. At the top of the feed containers there is no risk of getting dirty or of damaging the sensor by the animals.

The feeding device preferably comprises a frame having a foot being at a level at distance below the feeding tray, and that between the coupling element and the weighing sensor a spring is arranged that can be compressed/stretched over a distance greater than said distance between the level of the foot and the feeding tray, to prevent overloading of the weighing sensor. Because the maximum distance the feed tray can lower down is less than the distance the spring can be stretched/compressed the force acted on the sensor is at maximum the spring constant multiplied by the distance the spring is stretched/compressed, which force is less than the maximum force the sensor can handle.

A further embodiment of the feeding device according to the invention is characterized in that the two feed containers are identical, wherein one of the feed containers with a side wall being in contact with the corresponding side wall of the other feed container in a position rotated over 180 degrees about a vertical axis, wherein the side walls that are in contact with each other, each comprise two wall parts staggered relative to each other and extending downwardly from the top of the feed containers, one of the wall parts having a recessed position relative to the other wall part and being larger than this other wall part, so that a vertical channel is formed in the middle of the two feed containers located against each other. Because the containers are identical they can be stacked so that they need less space during transportation of the individual parts of the device. Preferably, the elongated coupling element can be arranged in the channel between the two feed containers.

The feeding device preferably comprises at least one water supply line to the feeding tray and preferably in one of the wall parts of each feed container there is a slot extending downwards from the top of the feed container, through which the water supply line extends to the feeding tray.

Yet a further embodiment of the feeding device according to the invention is characterized in that a retaining plate is present at a distance below the discharge opening of each feed container, which retaining plate that is larger than or equal to the size of the discharge opening, so that between the retaining plate and the part of the feed container adjacent to the discharge opening there is a discharge slit, and that a rotatable scraper is present above this retaining plate, which scraper during rotation pushes feed through the discharge slit and is connected to a drive motor that is coupled to the control means for controlling the discharge of feed.

Yet a further embodiment of the feeding device according to the invention is characterized in that on the feeding tray there are anti-spoil elements formed of panels provided with an opening in the middle providing access to the feed in the feeding tray, which anti-spoil elements form an obstacle at the border of the feeding tray preventing feed from going over the border of the feeding tray.

### Brief description of the drawings

The invention will be further elucidated below on the basis of drawings. These drawings show an embodiment of the feeding device according to the present invention. In the drawings:
Figure 1 is the feeding device according to the invention in perspective view;
Figure 2 is the feeding device without the frame;
Figure 3 is a perspective view of the two feed containers;
Figure 4 shows a pair of stacked feed containers;
Figure 5 is a feed container in top view;
Figure 6 is the feed container in side view with part of the weighing device and water supply lines which do not form part of the claimed invention;
Figure 7 is a feed discharge means of the feeding device;
Figure 8 is a detailed view of the feed discharge means;
Figure 9 is the overload preventing mechanism of the feeding device;
Figure 10 is a preset mechanism of the feeding device;
Figure 11 is a diagram of the control means cooperating with the preset mechanism;
Figure 12 panels provided with a different embodiment of the water supply lines, in accordance with the claimed invention;
Figure 13 a first embodiment of an anti-spoil element; and
Figure 14 a second embodiment of an anti-spoil element.

### Detailed description of the drawings

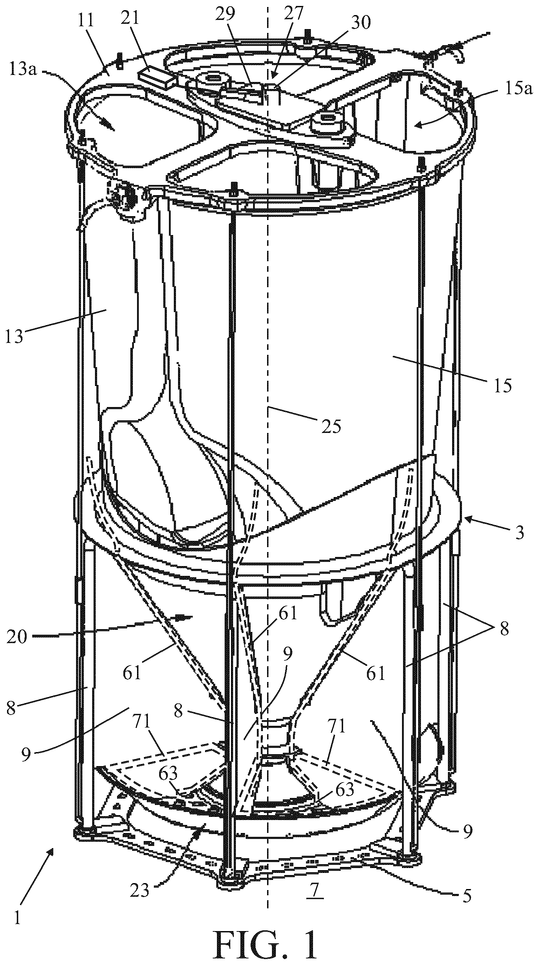

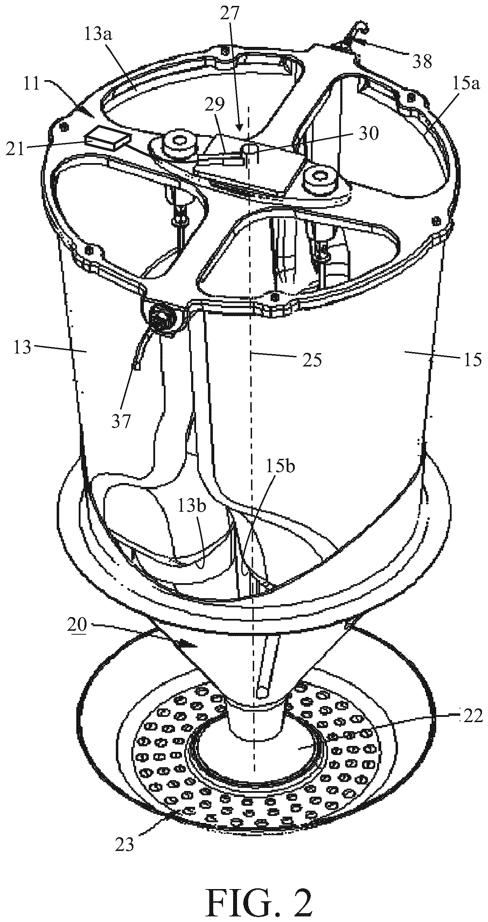

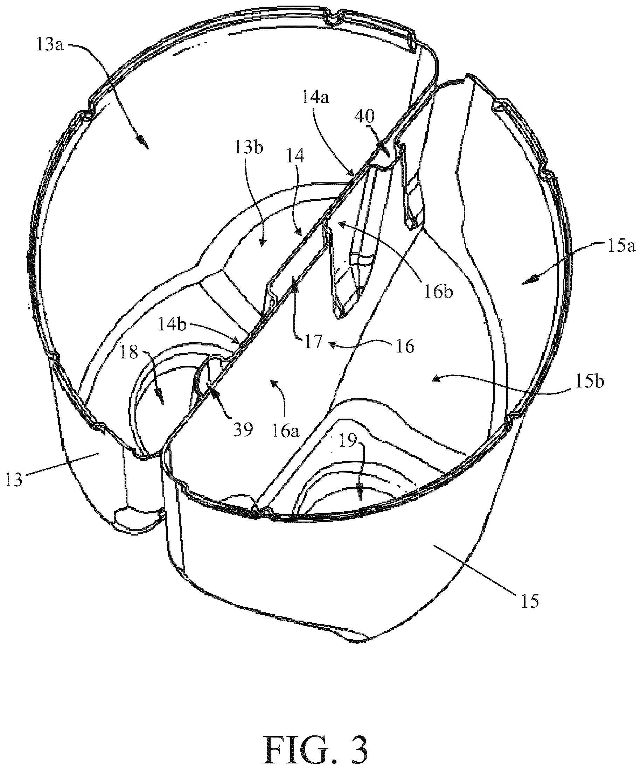

In Figure 1 an embodiment of is shown of the feeding device according to the invention. The feeding device 1 has a frame 3 carrying two feed containers 13 and 15, each having a top 13a, 15a and a bottom 13b, 15b, see Figure 2. The bottoms are provided with discharge openings 18 and 19, see Figure 3, which end up in a funnel 20. The feeding device further comprises control means 21, see Figure 1, for controlling feed output through the discharge openings. A feeding tray 23 is arranged below the discharge openings 18 and 19. This feeding tray 23 is freely rotatable about a vertical axis 25. The frame 3 has a foot 5 formed by a ring shaped plate at ground level 7. Uprights 8 are provided on the plate and vertical extending panels 9 are fixed to the uprights to divide the area around the feeding tray 23 into separate feeding areas for animals. The funnel 20 is connected to the uprights to support the feeding containers 13 and 15. On top of the uprights a mounting plate 11 is arranged. In Figure 2 the feeding device 1 is shown without the frame. Below the funnel 20 there is a cone 22 for dividing the feed over the feed tray 23.

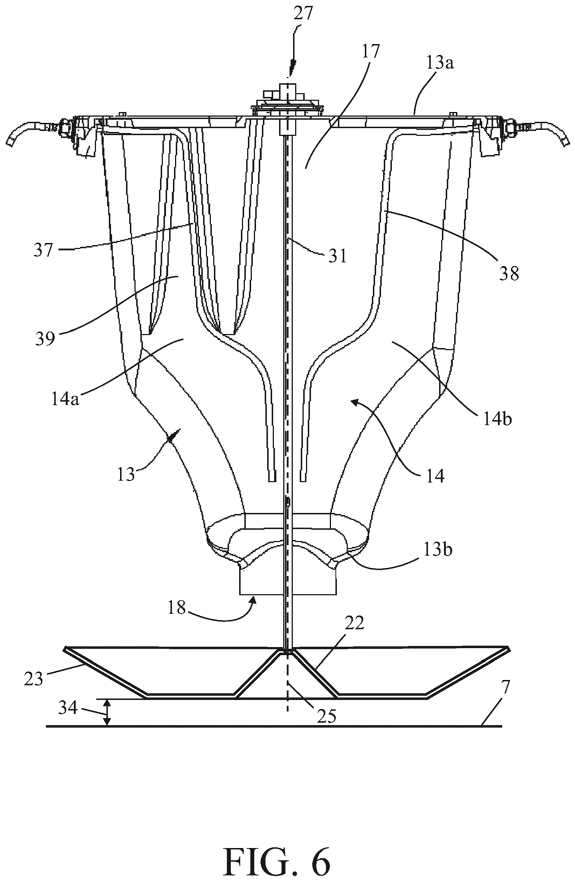

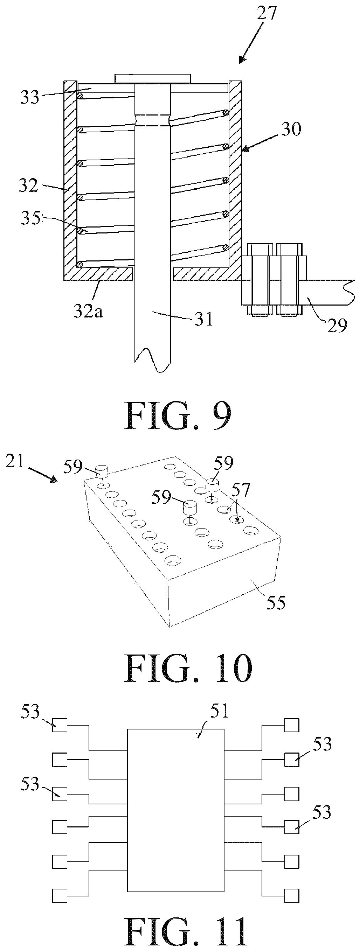

The feeding device comprises a weighing device 27 having a weighing sensor 29 arranged on the mounting plate 11. The feeding tray 23 is coupled to the weighing sensor 29 by means of an elongated coupling element 31, see Figure 6. There is an overload preventing mechanism 30 between the feeding tray 23 and the weighing sensor 29. This overload preventing mechanism comprises a spring 35, see Figure 9, arranged in a cylinder 32 connected to the weighing sensor 29. This spring 35 is between a bottom 32a of the cylinder and a plate 33 fixed to the upper end of the coupling element 31. If animals exert a large downward force on the tray, for example because they stand on it, the spring 35 will be compressed and the tray is pushed down onto the floor. The spring 35 can be compressed over a distance greater than the distance 34, see Figure 6, between the ground level 7 and the feeding tray 23, so that overloading of the weighing sensor 29 is prevented.

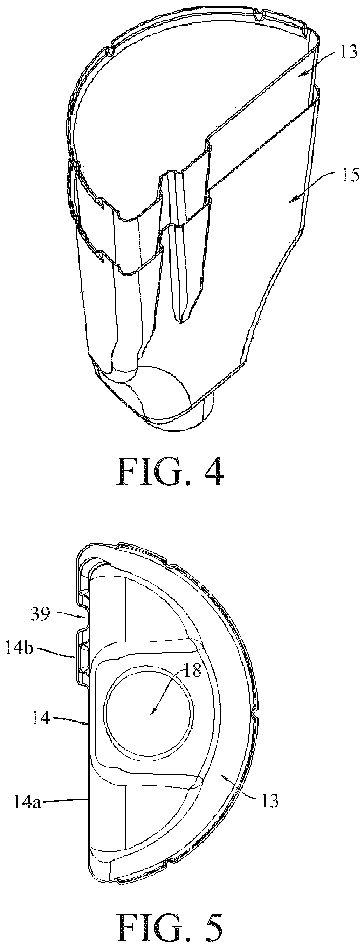

The two feed containers 13 and 15 are identical so that they can be stacked, see Figure 4. In the feeding device the feed containers are in contact with each other with side walls 14 and 16, see Figure 3. Each side wall comprises two wall parts 14a and 14b respectively 16a and 16b staggered relative to each other and extending downwardly from the top 13a, 15a of the feed containers, see also Figure 5. One of the wall parts 14a, 16a having a recessed position relative to the other wall part14b, 16b and being larger than this other wall part, so that a vertical channel 17 is formed in the middle of the two feed containers. In this channel 17 the elongated coupling element 31 extends, see Figure 6.

In an embodiment not forming part of the claimed invention, the feeding device 1 further comprises two water supply lines 37 and 38 which extend to the feeding tray 23, see Figure 6. These water supply lines extend trough slots 39 and 40 in wall parts 14a and 16a of each feed container, see also Figure 3. These slots extend downwards from the top 13a, 15a of the feed containers.

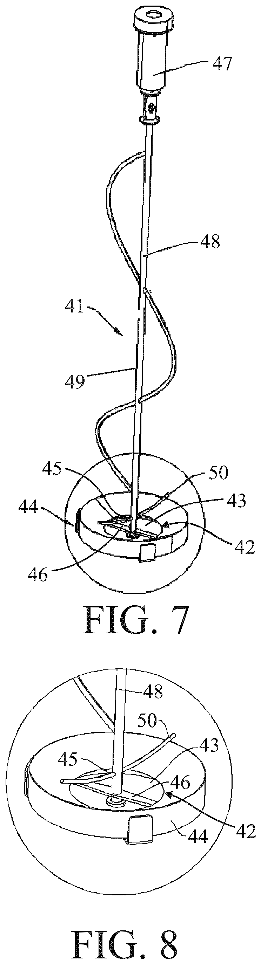

Figures 7 and 8 show a feed discharge means 41 of the feeding device. This feed discharge means comprises a retaining plate 43 that is at a distance below an opening 42 in a cone 44 to be fixed in the discharge opening of the feed container. This retaining plate 43 is larger than or equal to the size of this opening 42, so that between the retaining plate 43 and the part of the cone 44 adjacent to the opening 42 there is a discharge slit 45. A rotatable scraper 46 is arranged above the retaining plate 43. During rotation this scraper 46 pushes feed through the discharge slit 45. The scraper is connected to a drive motor 47 via a bar 48. This drive motor 47 is coupled to the control means for controlling the discharge of feed. Mixing rods 49 and 50 are fixed to the bar 48.

Figure 11 is a diagram of the control means cooperating with a preset mechanism of the feeding device shown in Figure 10. The control means 21 comprise a control center 51 and several magnetic sensors 53. The control center 51 detects the presence of magnets in the preset mechanism. The magnetic sensors 53 are electrically connected to the control center 51 to control the rotation of the feed discharge means. The control means are inside the housing 55 of a preset mechanism. The housing 55 has several slots 57 in which magnets 59 can be inserted. The slots 57 correspond with the magnetic sensors 53. The preset information includes feed amount, water amount and feed mixture ratio.

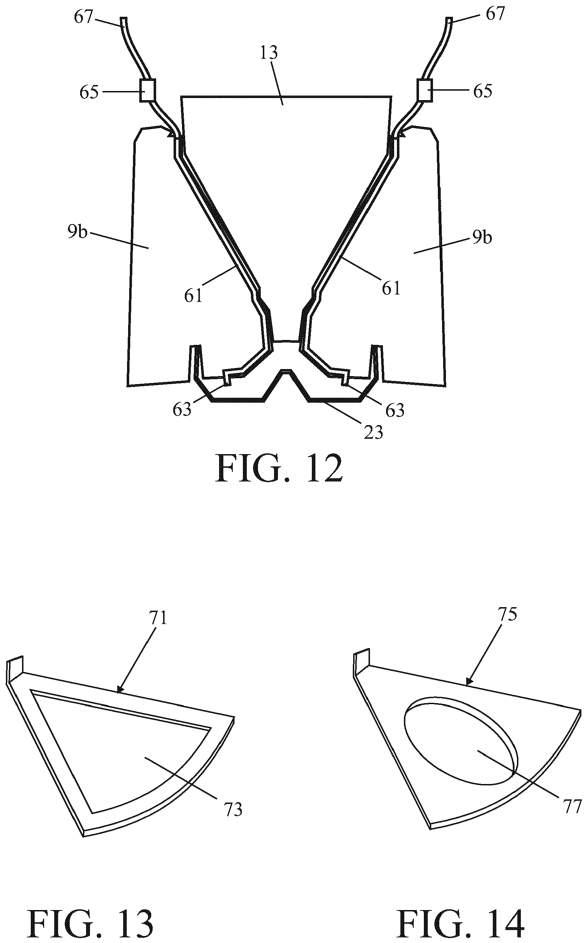

In figure 12 a different embodiment of the water supply lines 61 in accordance with the claimed invention is shown. These water supply lines are integrated in the vertical extending panels 9b. These panels 9b are blow molded so that in one production step both the panels 9b as well as the water supply line 61 can be manufactured. In figure 1 these alternative water supply lines 61 are shown in broken lines. The outflow openings 63 of the water supply lines 61 are not located near the center of the feeding tray 23 but at distance from the center near the middle between the center and the border of the feeding tray. Because the feed is supplied in the center and should go smoothly from there to the eating area of the feeding tray 23 it has to be dry in the center of the tray otherwise it will stick to the tray in the center and block further feed supply. Water hoses 67 are connected to the upper ends of the water supply lines 61 and are provided with valves 65 to control the water supply.

When pigs are eating, they try to move feed from the feeding tray 23 to the floor (they like to "dig" in the feeding tray) because of their natural behaviour (in wild nature they can find many tasty things in the soil). To prevent feed losses anti-spoil elements 71 are illustrated in broken lines in figure 1 and are present on the feeding tray 23 between the vertical panels 9. These anti-spoil elements 71 prevent feed to go over de border of the feeding tray 23 to the floor.

In figure 13 one anti-spoil element 71 is shown. These anti-spoil elements 71 are formed by panels provided with an opening 73 in the middle for pig's snout, providing access to the feed in the feeding tray only in the right and controlled place. At the border of the feeding tray they form an obstacle that prevents feed from going over the border of the feeding tray. In figure 14 a different embodiment of the anti-spoil element 75 is shown having a round opening 77 in the panel.

Although the present invention is elucidated above on the basis of the given drawings, it should be noted that this invention is not limited whatsoever to the embodiment shown in the drawings. The invention also extends to all embodiments deviating from the embodiment shown in the drawings within the scope of the invention defined by the appended claims.

## Claims

1. Feeding device (1) for animals, in particular pigs, comprising:
- two feed containers (13, 15), each having a top (13a, 15a) and a bottom (13b, 15b), which bottom is provided with a discharge opening (18, 19),
- control means (21) for controlling feed output through the discharge openings (18, 19), and
- a feeding tray (23) below the discharge openings (18, 19), which feeding tray (23) is freely rotatable about a vertical axis (25),
wherein above the feeding tray (23) there are vertical extending panels (9) dividing the area above the feeding tray (23) into separate feeding areas for animals, which vertical extending panels (9) are provided with water supply lines (61) having outflow openings (63), **characterized in that** the outflow openings (63) of the water supply lines (61) are located at distance from the center of the feeding tray (23) near the middle between the center and the border of the feeding tray (23).

2. Feeding device according to claim 1, **characterized in that** it further comprises a weighing device (27) which is coupled to the feeding tray (23).

3. Feeding device according to claim 2, **characterized in that** the weighing device (27) comprises a weighing sensor (29) which is present near the top (13a, 15a) of the feed containers (13, 15), as well as an elongated coupling element (31) which is connected at one end to the feeding tray (23) and at the other end to the weighing sensor (29).

4. Feeding device according to claim 3, **characterized in that** it further comprises a frame (3) having a foot (5) being at a level (7) at distance (34) below the feeding tray (23), and that between the coupling element (31) and the weighing sensor (29) a spring (35) is arranged that can be compressed/stretched over a distance greater than said distance (34) between the level (7) of the foot (5) and the feeding tray (23), to prevent overloading of the weighing sensor (29).

5. Feeding device according to any of the preceding claims, **characterized in that** the two feed containers (13, 15) are identical, wherein one of the feed containers (13) with a side wall (14) being in contact with the corresponding side wall (16) of the other feed container (15) in a position rotated over 180 degrees about the vertical axis (25), wherein the side walls (14, 16) that are in contact with each other, each comprise two wall parts (14a, 14b, 16a, 16b) staggered relative to each other and extending downwardly from the top (13a, 15a) of the feed containers, one of the wall parts (14a, 16a) having a recessed position relative to the other wall part (14b, 16b) and being larger than this other wall part, so that a vertical channel (17) is formed in the middle of the two feed containers located against each other.

6. Feeding device according to claim 5 with reference to claims 3 or 4, **characterized in that** the elongated coupling element (31) protrudes through the channel (17) between the two feed containers (13, 15).

7. Feeding device according to any of the preceding claims, **characterized in that** a retaining plate (43) is present at a distance below the discharge opening (18, 19) of each feed container, which retaining plate (43) that is larger than or equal to the size of the discharge opening (18, 19), so that between the retaining plate and the part of the feed container adjacent to the discharge opening there is a discharge slit (45), and that a rotatable scraper (46) is present above this retaining plate (43), which scraper (46) during rotation pushes feed through the discharge slit (45) and is connected to a drive motor (47) that is coupled to the control means (21) for controlling the discharge of feed.

8. Feeding device according to any of the preceding claims, **characterized in that** on the feeding tray (23) there are anti-spoil elements (71; 75) formed of panels provided with an opening (73; 77) in the middle providing access to the feed in the feeding tray, which ant-spoil elements form an obstacle at the border of the feeding tray (23) preventing feed from going over the border of the feeding tray (23).

## Patentansprüche

1. Fütterungsvorrichtung (1) für Tiere, insbesondere Schweine, umfassend:
- zwei Futterbehälter (13, 15), die jeweils eine Oberseite (13a, 15a) und eine Unterseite (13b, 15b) aufweisen, wobei die Unterseite mit einer Abgabeöffnung (18, 19) versehen ist,
- Steuermittel (21) zum Steuern der Futterausgabe durch die Abgabeöffnungen (18, 19), und
- eine Futterschale (23) unterhalb der Abgabeöffnungen (18, 19), wobei die Futterschale (23) um eine vertikale Achse (25) frei drehbar ist,
wobei sich über die Futterschale (23) vertikal verlaufende Platten (9) befinden, die den Bereich über die Futterschale (23) in getrennte Fütterungsbereiche für Tiere unterteilen, wobei die vertikal verlaufenden Platten (9) mit Wasserversorgungsleitungen (61) mit Abflussöffnungen (63) versehen sind, **dadurch gekennzeichnet, dass** die Abflussöffnungen (63) der Wasserzuleitungen (61) im Abstand von der Mitte der Futterschale (23) nahe der Mitte zwischen Mitte und Rand der Futterschale (23) angeordnet sind.

2. Fütterungsvorrichtung nach Anspruch 1, **dadurch gekennzeichnet, dass** sie ferner eine Wiegevorrichtung (27) umfasst, die mit der Futterschale (23) gekoppelt ist.

3. Fütterungsvorrichtung nach Anspruch 2, **dadurch gekennzeichnet, dass** die Wiegevorrichtung (27) einen Wiegesensor (29) umfasst, der nahe der Oberseite (13a, 15a) der Futterbehälter (13, 15) vorhanden ist, sowie einen längliches Kupplungselement (31), das an einem Ende mit der Futterschale (23) und am anderen Ende mit dem Wiegesensor (29) verbunden ist.

4. Fütterungsvorrichtung nach Anspruch 3, **dadurch gekennzeichnet, dass** sie ferner einen Rahmen (3) mit einem Fuß (5) aufweist, der sich auf einer Ebene (7) im Abstand (34) unterhalb der Fütterungsschale (23) befindet, und dass zwischen dem Kopplungselement (31) und dem Wiegesensor (29) eine Feder (35) angeordnet ist, die über eine größere Distanz als die Distanz (34) zwischen der Ebene (7) des Fußes (5) und der Futterschale (23) komprimiert/gedehnt werden kann, um eine Überlastung des Wiegesensors (29) zu vermeiden.

5. Fütterungsvorrichtung nach einem der vorhergehenden Ansprüche, **dadurch gekennzeichnet, dass** die beiden Futterbehälter (13, 15) identisch sind, wobei einer der Futterbehälter (13) mit einer Seitenwand (14) an der entsprechenden Seitenwand (16) des anderen Futterbehälters (15) anliegt in einer um 180 Grad um die vertikale Achse (25) gedrehten Position, wobei die aneinander anliegenden Seitenwände (14, 16) jeweils zwei Wandteile (14a, 14b, 16a, 16b) die relativ zueinander versetzt sind umfassen und sich von der Oberseite (13a, 15a) der Futterbehälter nach unten erstrecken, wobei einer der Wandteile (14a, 16a) eine vertiefte Position relativ zu dem anderen Wandteil (14b, 16b) hat und größer ist als dieser andere Wandteil, so dass in der Mitte der beiden aneinander liegenden Futterbehälter ein vertikaler Kanal (17) gebildet ist.

6. Fütterungsvorrichtung nach Anspruch 5 unter Bezugnahme auf Anspruch 3 oder 4, **dadurch gekennzeichnet, dass** das längliche Kupplungselement (31) durch den Kanal (17) zwischen den beiden Futterbehältern (13, 15) hindurch ragt.

7. Fütterungsvorrichtung nach einem der vorhergehenden Ansprüche, **dadurch gekennzeichnet, dass** eine Halteplatte (43) in einem Abstand unterhalb der Ausgabeöffnung (18, 19) jedes Futterbehälters vorhanden ist, welche Halteplatte (43) größer ist als oder gleich groß ist wie die Abgabeöffnung (18, 19), so dass zwischen der Halteplatte und dem der Abgabeöffnung benachbarten Teil des Futterbehälters ein Abgabeschlitz (45) vorhanden ist, und dass ein drehbarer Abstreifer (46) oberhalb dieser Halteplatte (43) vorhanden ist, wobei der Abstreifer (46) bei Rotation Futter durch den Abgabeschlitz (45) schiebt und mit einem Antriebsmotor (47) verbunden ist, der mit der Steuereinrichtung (21) zur Steuerung des Austrags von Futter gekoppelt ist.

8. Fütterungsvorrichtung nach einem der vorhergehenden Ansprüche, **dadurch gekennzeichnet, dass** auf der Fütterungsschale (23) Anti-Abfall-Elemente (71; 75) vorhanden sind, die aus Platten gebildet sind, die mit einer Öffnung (73; 77) in der Mitte versehen sind die Zugang bietet zu dem Futter in der Futterschale, wobei die Anti-Abfall-Elemente ein Hindernis am Rand der Futterschale (23) bilden, das verhindert, dass Futter über den Rand der Futterschale (23) gelangt.

## Revendications

1. Dispositif d'alimentation (1) pour animaux, notamment porcins, comprenant :
- deux récipients d'alimentation (13, 15), ayant chacun un dessus (13a, 15a) et un fond (13b, 15b), lequel fond est pourvu d'une ouverture de décharge (18, 19),
- des moyens de commande (21) pour commander la sortie d'alimentation à travers les ouvertures de décharge (18, 19), et
- un plateau d'alimentation (23) sous les ouvertures de décharge (18, 19), lequel plateau d'alimentation (23) peut tourner librement autour d'un axe vertical (25),
dans lequel au-dessus du plateau d'alimentation (23) se trouvent des panneaux s'étendant verticalement (9) divisant la zone au-dessus du plateau d'alimentation (23) en zones d'alimentation séparées pour les animaux, lesquels panneaux s'étendant verticalement (9) sont pourvus de conduites d'alimentation en eau (61) ayant ouvertures de sortie (63), **caractérisé en ce que** les ouvertures de sortie (63) des conduites d'alimentation en eau (61) sont situées à distance du centre du plateau d'alimentation (23) près du milieu entre le centre et le bord du plateau d'alimentation (23).

2. Dispositif d'alimentation selon la revendication 1, **caractérisé en ce qu'**il comprend en outre un dispositif de pesée (27) qui est accouplé au plateau d'alimentation (23).

3. Dispositif d'alimentation selon la revendication 2, **caractérisé en ce que** le dispositif de pesée (27) comprend un capteur de pesée (29) qui est présent à proximité du sommet (13a, 15a) des récipients d'alimentation (13, 15), ainsi qu'un élément de couplage allongé (31) qui est relié à une extrémité au plateau d'alimentation (23) et à l'autre extrémité au capteur de pesée (29).

4. Dispositif d'alimentation selon la revendication 3, **caractérisé en ce qu'**il comprend en outre un châssis (3) comportant un pied (5) se trouvant à un niveau (7) à distance (34) en dessous du plateau d'alimentation (23), et qu'entre le l'élément d'accouplement (31) et le capteur de pesée (29) un ressort (35) est agencé qui peut être comprimé/étiré sur une distance supérieure à ladite distance (34) entre le niveau (7) du pied (5) et l'alimentation plateau (23), pour éviter la surcharge du capteur de pesage (29).

5. Dispositif d'alimentation selon l'une quelconque des revendications précédentes, **caractérisé en ce que** les deux récipients d'alimentation (13, 15) sont identiques, dans lequel l'un des récipients d'alimentation (13) avec une paroi latérale (14) étant en contact avec le côté correspondant paroi (16) de l'autre récipient d'alimentation (15) dans une position tournée sur 180 degrés autour de l'axe vertical (25), dans laquelle les parois latérales (14, 16) qui sont en contact l'une avec l'autre comprennent chacune deux parties de paroi (14a, 14b, 16a, 16b) décalées l'une par rapport à l'autre et s'étendant vers le bas à partir du dessus (13a, 15a) des récipients d'alimentation, l'une des parties de paroi (14a, 16a) ayant une position en retrait par rapport à l'autre partie de paroi (14b, 16b) et étant plus grande que cette autre partie de paroi, de sorte qu'un canal vertical (17) est formé au milieu des deux récipients d'alimentation situés l'un contre l'autre.

6. Dispositif d'alimentation selon la revendication 5 en référence aux revendications 3 ou 4, **caractérisé en ce que** l'élément d'accouplement allongé (31) fait saillie à travers le canal (17) entre les deux récipients d'alimentation (13, 15).

7. Dispositif d'alimentation selon l'une quelconque des revendications précédentes, **caractérisé en ce qu'**une plaque de retenue (43) est présente à une distance en dessous de l'ouverture de décharge (18, 19) de chaque récipient d'alimentation, laquelle plaque de retenue (43) est plus grande que ou égale à la taille de l'ouverture décharge (18, 19), de sorte qu'entre la plaque de retenue et la partie du récipient d'alimentation adjacente à l'ouverture décharge se trouve une fente décharge (45), et qu'un racleur rotatif (46) est présent au-dessus de cette plaque de retenue (43), lequel racloir (46) pendant la rotation pousse l'alimentation à travers la fente décharge (45) et est relié à un moteur d'entraînement (47) qui est couplé aux moyens de commande (21) pour commander l'évacuation de fourrage.

8. Dispositif d'alimentation selon l'une quelconque des revendications précédentes, **caractérisé en ce que** sur le plateau d'alimentation (23) se trouvent des éléments anti-détérioration (71; 75) formés de panneaux munis d'une ouverture (73; 77) au milieu permettant d'accéder aux aliments dans le plateau d'alimentation, lesquels éléments anti- détérioration forment un obstacle au bord du plateau d'alimentation (23) empêchant les aliments de dépasser le bord du plateau d'alimentation (23).
